Europäisches Patentamt

European Patent Office

Office européen des brevets

(11) Publication number: **0 177 974 B1**

# EUROPEAN PATENT SPECIFICATION

(45) Date of publication of patent specification: **12.09.90**

(21) Application number: **85112943.7**

(22) Date of filing: **11.10.85**

(51) Int. Cl.⁵: **C 08 F 14/06, C 08 F 2/20**

(54) A method for the preparation of a polyvinyl chloride resin.

(30) Priority: **12.10.84 JP 214075/84**

(43) Date of publication of application:
**16.04.86 Bulletin 86/16**

(45) Publication of the grant of the patent:
**12.09.90 Bulletin 90/37**

(84) Designated Contracting States:
**BE DE FR GB IT NL SE**

(56) References cited:
**EP-A- 166 416**
**EP-A- 166 430**
**WO-A-81/03334**

**PATENTS ABSTRACTS OF JAPAN, vol. 4, no. 30 (C-2)512r, 15 March 1980**

(73) Proprietor: **Shin-Etsu Chemical Co., Ltd.**
**6-1, Ohtemachi 2-chome**
**Chiyoda-ku Tokyo 100 (JP)**

(72) Inventor: **Itoh, Kenichi**
**201 Dixie Dr. 1805**
**Clute Tx 77531 (US)**
Inventor: **Noguki, Genji**
**297-25, Oaza Tonda**
**Shinnanyo-shi Yamaguchi-ken (JP)**

(74) Representative: **Jaeger, Klaus, Dipl.-Chem. Dr. et al**
**Jaeger, Steffens & Köster Patentanwälte**
**Pippinplatz 4a**
**D-8035 München-Gauting (DE)**

**Description**

Background of the Invention

The present invention relates to an improved method for the preparation of a polyvinyl chloride resin or, more particularly, to a method for the preparation of a polyvinyl chloride resin in a powdery form containing an extremely small number of fish eyes and having a remarkably increased bulk density of the powder as well as excellent thermal stability.

As is well known, products of polyvinyl chloride resins in a powdery form are produced in large quantities mostly by the suspension polymerization of vinyl chloride monomer as the starting material in an aqueous polymerization medium in the presence of a free-radical polymerization initiator. The powdery products of polyvinyl chloride resins in general are required to have a bulk density as large as possible from the standpoint of obtaining a high productivity relative to the extrudable amount of a resin per unit time in the extrusion molding of, in particular, rigid or unplasticized resin articles.

It is generally understood that, in the suspension polymerization of vinyl chloride monomer in an aqueous polymerization medium, the bulk density of the powdery polyvinyl chloride resin product is largely influenced by the kind of the dispersing agent dissolved in the aqueous medium and the conditions of agitation of the polymerization mixture. Accordingly, various proposals and attempts have been made hitherto in these respects to obtain a powdery resin product having an increased bulk density. The increase of the bulk density of the powdery resin products in these prior art methods, however, is obtained only at a sacrifice that the porosity of the resin is decreased and the number of fish eyes in the resin is increased.

Needless to say, polyvinyl chloride resin products should have a porosity as large as possible in consideration of the plasticizer absorption and gelation behavior of the resin in molding and it is known that the porosity of the resin can be increased by the addition of a surface active agent to the polymerization medium although the bulk density of the powdery resin product is always decreased when such a means is undertaken. Thus, a contradictory relationship exists between increase in the bulk density and increase in the porosity of a polyvinyl chloride resin so that these two requirements can be satisfied simultaneously only with great difficulties.

In recent years, a proposal has been made in the direction to solve this difficult problem (see Japanese Patent Kohyo 57—500614 and 57—500650) according to which the dispersing agent added to the aqueous polymerization medium is a combination of a water-insoluble carboxy-containing partially crosslinked polymer and a water-soluble non-ionic surface active agent. This method is indeed effective to some extent in respect of increasing the bulk density of the powdery resin product but no sufficient effect can be obtained thereby when increase in the porosity is desired along with a decreased number of fish eyes in the resin product. In particular, a decreased number of fish eyes is an essential factor in order that the polyvinyl chloride resin can give shaped articles of high quality. Moreover, the above mentioned prior art method is not always applicable to practical production of polyvinyl chloride resins due to the relatively poor thermal stability of the resin product.

The above mentioned fish eyes in the shaped articles are caused by the so-called glassy beads contained in the powdery polyvinyl chloride resin product, which have been formed as a result of the poor dispersion of the polymerization initiator in the vinyl chloride monomer, in particular, in the early stage of the polymerization. Accordingly, uniform dispersion of the polymerization initiator in the monomer is important in order to prevent formation of glassy beads of the resin. The uniformity of dispersion of the polymerization initiator in the monomer can be improved in several ways including a method in which the polymerization mixture in the polymerization reactor after introduction of the polymerization initiator is thoroughly agitated before starting the polymerization reaction so as to disperse the initiator in the monomer as uniformly as possible and a method in which the polymerization initiator is introduced into the polymerization reactor as dissolved in advance in the vinyl chloride monomer. The former method is, however, not free from a difficulty when the dispersing agent dissolved in the aqueous polymerization medium has an effect to remarkably increase the viscosity of the aqueous medium because even the most vigorous agitation alone cannot give uniformity of the initiator dispersion. The latter method, on the other hand, is accompanied by a disadvantage that polymer scale is sometimes deposited on the inner walls of the vessel used for dissolving the initiator in the monomer and the piping used for introducing the monomer containing the initiator into the polymerization reactor. It is also proposed that the polymerization initiator is introduced into the reactor as dissolved only in a part of the vinyl chloride monomer and the remaining portion of the monomer is then introduced into the reactor to exhibit an effect of washing and cleaning the piping and others. This method, however, is not much better in respect of the uniformity of the dispersion of the initiator into the monomer than the above mentioned method relying merely on vigorous agitation.

Furthermore, EP—A—166 416 and EP—A— 166 430 are related to improvements in suspension polymerization. The teaching of said documents belongs to the state of the art according to Article 54 (3) and (4) EPC only.

EP—A—166 416 teaches a method for the suspension polymerization of vinly chloride monomer or a monomer mixture mainly composed of vinyl chloride in a aqueous medium in the presence of a monomer-soluble polymerization initiator wherein the aqueous medium is admixed with

(a) a water-soluble cross-linked copolymer of a polymerizable unsaturated carboxylic acid compound and a specific ethylene glycol bis-allyl ether or bis-methallyl ether as a cross-linking agent, and

(b) a non-ionic surface active agent.

EP—A—166 430 teaches a method for the suspension polymerization of vinyl chloride monomer or a monomer mixture mainly composed of vinyl chloride in an aqueous polymerization medium containing a non-ionic surface active agent and in the presence of a monomer-soluble polymerization initiator wherein the aqueous polymerization medium is admixed with a cross-linking copolymer having carboxyl groups at a moment when the percentage of the monomer conversion is in the range from 1 to 20%. The cross-linked copolymer explicitly described is the same as in EP—A—166 416.

## Summary of the Invention

It is an object of the present invention to provide a method for the preparation of a highly heat-resistant polyvinyl chloride resin having a particularly large bulk density and containing a greatly decreased number of glassy beads responsible for the fish eyes in the articles shaped of the resin product free from the above described problems and disadvantages in the prior art methods.

Thus, the present invention provides a method for the preparation of a polyvinyl chloride resin by the polymerization of vinyl chloride monomer or a monomer mixture mainly composed of vinyl chloride as dispersed in an aqueous polymerization medium in the presence of a polymerization initiator which comprises admixing the aqueous polymerization medium with:

(a) a monomer-soluble non-ionic surface active agent free of polyoxyethylene groups, and

(b) a water-soluble polymer of an ethylenically unsaturated polymerizable carboxylic acid compound which has been partially cross-linked by one or more of the following cross-linking agents: divinyl benzene, divinyl naphthalene, polybutadiene, ethylene glycol diacrylate, ethylene glycol dimethacrylate, allyl acrylate, methylene bisacrylamide, divinyl ether, diallyl ether, pentaerythritol, mannitol, glucose, saccharose, divinyl or dially silane compounds and low-molecular organopolysiloxanes having at least two vinyl groups in a molecule.

## Detailed description of the preferred embodiments

As is understood from the above given summarizing description, the scope of the inventive method is in the use of a combination of (a) a monomer-soluble non-ionic surface active agent free of polyoxyethylene groups and (b) a partially crosslinked polymer (as defined above) of an ethylenically unsaturated polymerizable carboxylic acid compound as the dispersing agent in the suspension polymerization of vinyl chloride monomer or a monomer mixture mainly composed of vinyl chloride. This method is effective in greatly decreasing the number of the glassy beads in the powdery polyvinyl chloride resin product which also is imparted with improved thermal stability or heat resistance. The effect of greatly decreasing the number of glassy beads is obtained presumably because the non-ionic surface active agent added to the polymerization medium is soluble in the monomer resulting in the very uniform dispersion of the polymerization initiator in the monomer. The effect of the inventive method on the thermal stability of the resin product is obtained, on the other hand, presumably due to the absence of polyoxyethylene linkages in the monomer-soluble non-ionic surface active agent while most of the water-soluble non-ionic surface active agents contain polyoxyethylene linkages having an adverse effect on the thermal stability of the resin product. Further, the specific partially cross-linked polymer as the component (b) to be combined with the above mentioned component (a) is soluble in the aqueous medium and an aqueous solution containing the crosslinked polymer is imparted with a greatly increased viscosity so that the powdery polyvinyl chloride resin obtained by the polymerization in such a polymerization medium has a remarkably increased bulk density.

Exemplary of the monomer-soluble non-ionic surface active agent as the additive (a) to the polymerization medium are partial carboxylic acid esters of sorbitan, partial carboxylic acid esters of sorbitol, partial carboxylic acid esters of saccharose, carboxylic acid esters of glycerin and carboxylic acid esters of polyglycerin. These non-ionic surface active agents are use either singly or as a combination of two kinds or more according to need. Conventional water soluble non-ionic surface active agents should not be used in the inventive method since they usually contain a polyoxyethylene linkage in a molecule which is very detrimental to the desired effects of the inventive method.

The additive (b) used in combination with the above described non-ionic surface active agent is a p-artially cross-linked polymer of an ethylenically unsaturated polymerizable carboxylic acid compound and such a partially crosslinked polymer is obtained by the polymerization of an ethylenically unsaturated polymerizable carboxylic acid compound in the presence of a relatively small amount of a compound having at least two ethylenically unsaturated polymerizable linkages in a molecule as a crosslinking agent or a comonomer to be copolymerized with the carboxylic acid compound having an ethylenically unsaturated linkage in a molecule.

Exemplary of the ethylenically unsaturated polymerizable carboxylic acid compound are acrylic acid, methacrylic acid, itaconic acid, chloroacrylic acid, cyanoacrylic acid, α-phenylacrylic acid, α-benzylacrylic acid, crotonic acid, maleic acid, fumaric acid, sorbic acid and the like. These unsaturated carboxylic acids may be used either singly or as a combination of two kinds or more according to need.

The crosslinking agents used may have at least two ethylenically unsaturated polymerizable linkages in a molecule and are divinyl benzene, divinyl naphthalene, soluble oligomeric dienes such as

EP 0 177 974 B1

polybutadiene, ethylene glycol diacrylate, ethylene glycol, dimethacrylate, allyl acrylate, methylene bisacrylamide, divinyl ether and dially ether. Pentaerythritol, mannitol, glucose, saccharose, divinyl, or diallyl silane compounds and low molecular organopolysiloxanes having at least two vinyl groups in a molecule may also be used as a crosslinking agent. These crosslinking agents also may be used either singly or as a combination of two kinds or more according to need.

The amount of the above mentioned crosslinking agent used in the preparation of the partially cross-linked polymer should be in the range from 0.05 to 10 parts by weight or, preferably, from 0.1 to 5 parts by weight per 100 parts by weight of the polymerisable carboxylic acid compound having an ethylenically unsaturated linkage in a molecule. When the amount thereof is smaller than the above range, the resultant copolymer naturally has a low degree of crosslinking so that the desired effects of the inventive method cannot be fully obtained. When the amount of the crosslinking agent is too large, on the other hand, the copolymer has an excessively high degree of crosslinking and is less effective as a dispersing agent.

The copolymerization of the unsaturated polymerizable carboxylic acid compound and the crosslinking agent is performed in an organic solvent such as benzene, toluene, n-hexane and ethyl acetate in the presence of a polymerization initiator which may be an azo compound, peroxide compound or redox-type initiator system such as azobisisobutyronitrile, 2,2'-azobis-(2,4-dimethyl-4-methoxy valeronitrile), benzoyl peroxide, cumene hydroperoxide, tert-butyl hydroperoxide, persulfates, combinations of a persulfate and a percarbonate, combinations of a persulfate and a sulfite.

In practicing the method of the present invention, the suspension polymerization of vinyl chloride monomer or a monomer mixture is performed in an aqueous polymerization medium containing preferably from 0.005 to 1 part by weight or, more preferably, from 0.01 to 0.5 part by weight of the monomer-soluble non-ionic surface active agent as the component (a) and preferably from 0.01 to 2 parts by weight or, more preferably, from 0.02 to 0.5 part by weight of the partially crosslinked polymer per 100 parts by weight of the monomer or monomer mixture.

The polymerization reaction according to the inventive method is carried out in the presence of a polymerization initiator which is usually a monomer-soluble free-radical initiator exemplified by organic peroxides such as a diisopropylperoxy dicarbonate, di-2-ethylhexylperoxy dicarbonate, acetyl cyclohexylsulfonyl peroxide, lauroyl peroxide and the like and azo compounds such as azobisisobutyronitrile, azo-bis-2,4-dimethyl valeronitrile and azobis-2,4-dimethoxy-2,4-dimethyl valeronitrile.

The method of the present invention is applicable satisfactorily to the suspension polymerization for the preparation of not only homopolymeric polyvinyl chloride resins but also copolymers of vinyl chloride with one or more of other monomers copolymerizable with vinyl chloride provided that the main monomeric component is vinyl chloride in an amount of preferably 50% by weight or more. Exemplary of other monomers copolymerizable with vinyl chloride are vinyl esters, e.g. vinyl acetate, vinyl ethers, acrylic and methacrylic acids and esters thereof, maleic and fumaric acids and esters thereof, maleic anhydride, aromatic vinyl compounds, e.g. styrene, unsaturated nitrile compounds, e.g. acrylonitrile, vinylidene halides, e.g. vinylidene fluoride and vinylidene chloride and olefins, e.g. ethylene and propylene.

It is advantageous in practicing the method of the present invention to undertake a measure to prevent deposition of polymer scale on the inner walls of the polymerization reactor and surfaces of other parts such as the stirrer coming into contact with the monomer or monomer mixture during the polymerization by coating the surfaces, prior to the introduction of the polymerization mixture into the reactor, with a scale deposition inhibitor which may be any of known ones in the prior art and disclosed, for example, in Japanese Patent Publications 45—30343, 45—30835, 55—5442, 56—5443 and 56—5444 such as various kinds of organic dyes including direct dyes, acidic dyes, basic dyes, mordant dyes, sulfur dyes, vat dyes, disperse dyes, oil soluble dyes and reactive dyes and polar organic compounds including amine compounds, quinone compounds and aldehyde compounds, of which dyes having an azine ring in the molecular structure are preferred. It is optional that the above mentioned means for the prevention of polymer scale deposition by coating the surfaces with an inhibitor is combined with addition of a water-soluble basic compound to the polymerization medium or mixture in an amount of 0.1% by weight or smaller based on the monomer or monomer mixture introduced into the polymerization reactor in order to further enhance the effect of polymer scale prevention.

Other conditions of the polymerization reaction, e.g. the amount of the polymerization initiator, polymerization temperature, length of polymerization time, etc., may be determined according to the conventional procedures for the suspension polymerization of vinyl chloride or a monomer mixture mainly composed of vinyl chloride without particular limitations.

In the following, the method of the present invention is described in more detail by way of examples.

### Example 1

Into a stainless steel-made polymerization reactor of 100 liter capacity were introduced 60 kg of deionized water, 30 g of partially crosslinked polymer of acrylic acid, which had been prepared by the copolymerization of 100 parts by weight of acrylic acid and 2 parts by weight of ethylene glycol diacrylate, as a dispersing agent, 30 g of sorbitan monolaurate having an HLB value of 8.6 as a non-ionic surface active agent and 20 g of di-2-ethylhexylperoxoxy dicarbonate as a polymerization initiator and, after evacuation of the rector to a pressure of 50 mmHg, 30 kg of vinyl chloride monomer were further introduced into the

4

reactor to form a polymerization mixture which was heated up to 57°C under agitation to start the polymerization reaction.

When the pressure inside the polymerization reactor, which was $8.4.10^5$ Pa (8.5 kg/cm$^2$G) at the start of the polymerization reaction, had dropped $5.9.10^5$ Pa (6.0 kg/cm$^2$G) after about 6 hours from the start, the polymerization reaction was terminated by recovering the unreacted vinyl chloride monomer and the polymerizate slurry was discharged out of the rector, dehydrated and dried to give a powdery polyvinyl chloride resin product in a yield of 88%. The polymer had an average degree of polymerization of 1050.

Table 1 below summarizes the properties of the thus obtained resin product including the bulk density in g/ml, number of fish eyes in pieces/100 cm$^2$ calculated according to the procedure described below and thermal stability in minutes determined according to the procedure described below.

Counting method of fish eyes: 100 parts by weight of the resin were blended with 50 parts by weight of dioctyl phthalate, 1 part by weight of dibutyltin dilaurate, 1 part by weight of cetyl alcohol, 0.25 part by weight of titanium dioxide and 0.05 part by weight of carbon black and the mixture was milled for 7 minutes on a two-roller mill at 150°C and shaped into a sheet having a thickness of 0.2 mm, of which the number of fish eyes was counted per 100 cm$^2$ area under transmission of light.

Method for the determination of thermal stability: a mixture of 100 part by weight of the resin, 1 part by weight of dibutyltin maleate and 1 part by weight of stearic acid was milled for 10 minutes on a two-roller mill kept at 170°C with a roller gap of 0.7 mm and shaped into a sheet having a thickness of 0.7 mm, from which test pieces were taken by cutting and heated in a Geer's oven at 180°C to determine the time in minutes taken for the discoloration of the test pieces to black.

Example 2

The procedure for the polymerization of vinyl chloride monomer was substantially the same as in Example 1 except that the sorbitan monolaurate as the surface active agent was replaced with the same amount of stearic acid monoglyceride having an HLB value of 3.5. The properties of the thus obtained polyvinyl chloride resin are shown in Table 1.

Example 3

The procedure for the polymerization of vinyl chloride monomer was substantially the same as in Example 1 except that the sorbitan monolaurate was replaced with the same amount of a fatty acid ester of saccharose having an HLB value of 8.3. The properties of the thus obtained polyvinyl chloride resin are shown in Table 1.

Comparative Example 1

The procedure for the polymerization of vinyl chloride monomer was substantially the same as in Example 1 except that the sorbitan monolaurate was replaced with the same amount of polyoxyethylene sorbitan monooleate having an HLB value of 15.0. The properties of the thus obtained polyvinyl chloride resin are shown in Table 1.

Comparative Example 2

The procedure for the polymerization of vinyl chloride monomer was substantially the same as in Example 1 except that the sorbitan monolaurate was replaced with the same amount of polyoxyethylene laurate ether having an HLB value of 12.1. The properties of the thus obtained polyvinyl chloride resin are shown in Table 1.

As is clear from the results shown in Table 1, each of the polyvinyl chloride resin products obtained in Examples 1 to 3 had a bulk density of at least 0.53 g/ml, number of fish eyes of 5 or less per 100 cm$^2$ and thermal stability of at least 110 minutes and were very superior to those obtained in Comparative Examples 1 and 2, in particular, in respects of the number of fish eyes and the thermal stability.

T a b l e   1

|  | Example | | | Comparative Example | |
|---|---|---|---|---|---|
|  | 1 | 2 | 3 | 1 | 2 |
| Bulk density, g/ml | 0.55 | 0.53 | 0.54 | 0.53 | 0.52 |
| Fish eyes, pieces/100 cm$^2$ | 3 | 5 | 2 | 340 | 270 |
| Thermal stability, minutes | 120 | 120 | 110 | 80 | 80 |

**Claims**

1. A method for the preparation of a polyvinyl chloride resin by the polymerization of vinyl chloride monomer or a monomer mixture mainly composed of vinyl chloride as dispersed in an aqueous polymerization medium in the presence of a polymerization initiator which comprises admixing the aqueous polymerization medium with:

(a) a monomer-soluble non-ionic surface active agent free of polyoxyethylene groups, and

(b) a water-soluble polymer of an ethylenically unsaturated polymerizable carboxylic acid compound which has been partially cross-linked by one or more of the following cross-linking agents: divinyl benzene, divinyl naphthalene, polybutadiene, ethylene glycol diacrylate, ethylene glycol dimethacrylate, allyl acrylate, methylene bisacrylamide, divinyl ether, diallyl ether, pentaerythritol, mannitol, glucose, saccharose, divinyl or diallyl silane compounds and low-molecular organopolysiloxanes having at least two vinyl groups in a molecule.

2. The method as claimed in claim 1 wherein the monomer-soluble non-ionic surface active agent (a) is selected from the group consisting of partial carboxylic acid esters of sorbitan, partial carboxylic acid esters of sorbitol, partial carboxylic acid esters of saccharose, carboxylic acid esters of glycerin and carboxylic acid esters of polyglycerin.

3. The method as claimed in claim 1 wherein the ethylenically unsaturated polymerizable carboxylic aid compound in (b) is selected from the group consisting of acrylic acid, methacrylic acid, itaconic acid, chloroacrylic acid, cyanoacrylic acid, α-phenylacrylic acid, α-benzylacrylic acid, crotonic acid, maleic acid, fumaric acid and sorbic acid.

4. The method as claimed in claim 1 wherein the amount of the monomer-soluble non-ionic surface active agent (a) is in the range from 0.005 to 1 part by weight per 100 parts by weight of the vinyl chloride monomer or the monomer mixture.

5. The method as claimed in claim 1 wherein the amount of the partially crosslinked polymer (b) of an ethylenically unsaturated polymerizable carboxylic acid compound is in the range from 0.01 to 2 parts by weight per 100 parts by weight of the vinyl chloride monomer or the monomer mixture.

6. The method as claimed in claim 1 wherein the partially cross-linked polymer (b) is prepared by the copolymerization of 100 parts by weight of an ethylenically unsaturated polymerizable carboxylic acid compound and from 0.05 to 10 parts by weight of a cross-linking agent as defined above.

**Patentansprüche**

1. Verfahren zur Herstellung eines Polyvinylchloridharzes durch Polymerisation von Vinylchlorid-Monomer oder einer hauptsächlich aus Vinylchlorid bestehenden Monomermischung, dispergiert in einem wässrigen Polymerisations medium in Anwesenheit eines Polymerisationsinitiators, wobei man das wässrige Polymerisationsmedium versetzt mit:

(a) einem monomer-löslichen, nicht-ionischen grenzflächenaktiven Mittel, das keine Polyoxyethylengruppen enthält, und

(b) einem wasserlöslichen Polymer aus einer ethylenisch ungesättigten polymerisierbaren Carbonsäureverbindung, die durch eines oder mehrere der folgenden Vernetzungsmittel: Divinylbenzol, Divinylnaphthalin, Polybutadien, Ethylenglykoldiacrylat, Ethylenglykoldimethyacrylat, Allylacrylat, Methylenbisacrylamid, Diphenylether, Diallylether, Pentaerythrit, Mannit, Glucose, Saccharose, Divinyl- oder Diallylsilanverbindungen und niedrig-molekularen Organopolysiloxanen mit mindestens zwei Vinylgruppen in einem Molekul teilweise vernetzt worden ist.

2. Verfahren nach Anspruch 1, worin das monomer-lösliche, nicht-ionische grenzflächenaktive Mittel (a) ausgewählt ist aus der Gruppe bestehend aus mit Carbonsäure teilweise verestertem Sorbitan, mit Carbonsäure teilweise verestertem Sorbit, mit Carbonsäure teilweise veresterter Saccharose, Carbonsäureestern von Glycerin und Carbonsäureestern von Polyglycerin.

3. Verfahren nach Anspruch 1, worin die ethylenisch ungesättigte polymerisierbare Carbonsäureverbindung in (b) ausgewählt ist aus der Gruppe bestehend aus Acrylsäure, Methacrylsäure, Itaconsäure, Chloracrylsäure, Cyanacrylsäure, α-Phenylacrylsäure, α-Benzylacrylsäure, Crotonsäure, Maleinsäure, Fumarsäure und Sorbinsäure.

4. Verfahren nach Anspruch 1, worin das monomer-lösliche, nicht-ionische grenzflächenaktive Mittel (a) in einer Menge von 0,005 bis 1 Gew.-Teil pro 100 Gew.-Teile des Vinylchloridmonomers oder der Monomermischung vorliegt.

5. Verfahren nach Anspruch 1, worin das teilweise vernetzte Polymer (b) aus einer ethylenisch ungesättigten polymerisierbaren Carbonsäureverbindung in einer Menge von 0,01 bis 2 Gew.-Teilen pro 100 Gew.-Teile des Vinyl-chloridmonomers oder der Monomermischung vorliegt.

6. Verfahren nach Anspruch 1, worin das teilweise vernetzte Polymer (b) durch Copolymerisation von 100 Gew.-Teilen einer ethylenisch ungesättigten polymerisierbaren Carbonsäureverbindung und von 0,05 bis 10 Gew.-Teilen eines wie zuvor definierten Vernetzungsmittles hergestellt wird.

## Revendications

1. Procédé pour la préparation d'une résine chlorure de polyvinyle par la polymérisation du monomère chlorure de vinyle ou d'un mélange de monomères essentiellement constitué de chlorure de vinyle, dispersé dans un milieu de polymérisation aqueux en présence d'un amorceur de polymérisation, le procédé comprenant l'operation consistant à mélanger le milieu de polymérisation aqueux avec:

(a) un agent tensioactif non ionique soluble dans le monomère, ne contenant pas de groupe polyoxyéthylène, et

(b) un polymère hydrosoluble d'un acide carboxylique polymérisable insaturé éthylénique, qui a été partiellement réticulé au moyen de l'un ou plusieurs des agents réticulants suivants: divinylbenzène, divinylnaphtalène, polybutadiène, diacrylate, d'éthylèneglycol, diméthacrylate, d'éthyléneglycol, acrylate d'allyle, méthylène-bis-acrylamide, divinyéther, diallyléther, pentaérythritol, mannitol, glucose, saccharose, divinyl- ou diallyl-silane et des organopolysiloxanes de faible masse moléculaire contenant au moins deux groupes vinyle par molécule.

2. Procédé selon la revendication 1, dans lequel l'agent tensioactif non ionique (a), soluble dans le monomère, est choisi dans le groupe constitué par les esters partiels d'acide carboxylique de sorbitanne, les esters partiels d'acide carboxylique de sorbitol, les esters partiels d'acide carboxylique de saccharose, les esters d'acide carboxylique de glycérol et les esters d'acide carboxylique de polyglycérol.

3. Procédé selon la revendication 1, dans lequel l'acide carboxylique polymérisable insaturé éthylénique dans (b) est choisi dans le groupe constituè pr l'acide acrylique, l'acide méthacrylique, l'acide itaconique, l'acide chloroacrylique, l'acide cyanoacrylique, l'acide α-phénylacrylique, l'acide α-benzylacrylique, l'acide crotonique, l'acide maléique, l'acide fumarique et l'acide sorbique.

4. Procédé selon la revendication 1, dans lequel la proportion l'agent tensioactif non ionique (a), soluble dans le monomère, est dans la gamme de 0,01 à 2 parties en poids pour 100 parties en poids du monomère chlorure de vinyle ou du mélange de monomères.

5. Procédé selon la revendication 1, dans lequel la proportion de polymère partiellement réticulé (b) d'un acide carboxylique polymérisable insaturé éthylénique est dans la gamme de 0,01 à 2 parties en poids pour 100 parties en poids du monomère vinylique ou du mélange de monomères.

6. Procédé selon la revendication 1, dans lequel le polymère partiellement réticulé (b) est préparé par la copolymérisation de 100 parties en poids d'un acide carboxylique polymérisable insaturé éthylénique et de 0,05 à 10 parties en poids d'un agent réticulant tel que défini ci-dessus.